# EUROPÄISCHE PATENTSCHRIFT

(11) **EP 2 816 869 B1**
(45) Veröffentlichungstag und Bekanntmachung des Hinweises auf die Patenterteilung: **21.04.2021**
(21) Anmeldenummer: 14172482.3
(22) Anmeldetag: 16.06.2014
(51) Int. Cl.: H05B 3/74, H05B 6/12

(54) **Kochfeldvorrichtung**
Hotplate device
Dispositif de plaque de cuisson

(30) Priorität: 21.06.2013 ES 201330945
(43) Veröffentlichungstag der Anmeldung: 24.12.2014
(73) Patentinhaber: BSH Hausgeräte GmbH, 81739 München (DE)
(72) Erfinder: Arnal Valero, Adolfo, 50009 Zaragoza (ES); Martin Gomez, Damaso, 20012 Zaragoza (ES); Pina Gadea, Carmelo, 50008 Zaragoza (ES); Torrubia Marco, Demetrio, 50003 Zaragoza (ES)

(56) Entgegenhaltungen:
- EP-A1- 2 475 220
- EP-A2- 2 427 032
- EP-A2- 2 595 450

## Beschreibung

Die Erfindung geht aus von einer Kochfeldvorrichtung nach dem Oberbegriff des Anspruchs 1.

Es ist bereits eine Kochfeldvorrichtung, und zwar eine Induktionskochfeldvorrichtung, mit mehreren Heizeinheiten, und zwar Induktionsheizeinheiten, die in montiertem Zustand an einer Platteneinheit befestigt sind, und mit mehreren Kochfeldelektronikmodulen zu einer Versorgung der Heizeinheiten, vorgeschlagen worden. EP 2 475 220 A1 offenbart eine Kochfeldvorrichtung gemäß dem Oberbegriff des Anspruches 1.

Die Aufgabe der Erfindung besteht insbesondere darin, eine gattungsgemäße Vorrichtung mit verbesserten Eigenschaften hinsichtlich einer Stabilität und/oder kurzen Montagezeit bereitzustellen. Die Aufgabe wird erfindungsgemäß durch die Merkmale des

Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einer Heizeinheit, insbesondere einer Induktionsheizeinheit, die zumindest in montiertem Zustand an zumindest einer Platteneinheit befestigt ist, und mit zumindest einem Kochfeldelektronikmodul zumindest zu einer Versorgung der Heizeinheit.

Es wird vorgeschlagen, dass die Kochfeldvorrichtung zumindest eine Verbindungseinheit, die dazu vorgesehen ist, die Heizeinheit und das Kochfeldelektronikmodul direkt und zumindest im Wesentlichen starr miteinander zu verbinden, aufweist. Unter einer "Heizeinheit" soll insbesondere eine Einheit verstanden werden, die dazu vorgesehen ist, elektrische Energie zumindest zu einem Großteil in Wärme umzuwandeln und damit insbesondere ein Gargut zu erhitzen. Insbesondere umfasst die Heizeinheit ein Strahlungsheizelement, ein Widerstandsheizelement und/oder vorzugsweise ein Induktionsheizelement. Insbesondere werden in einem Betriebszustand, in dem die Heizeinheit mit elektrischem Strom, insbesondere mit hochfrequentem Wechselstrom, versorgt wird, alle Heizelemente der Heizeinheit, vorzugsweise gleichzeitig, mit elektrischem Strom versorgt. Insbesondere ist die Heizeinheit als eine Induktionsheizeinheit ausgebildet. Insbesondere umfasst die Induktionsheizeinheit zumindest ein Induktionsheizelement. Unter einem "Induktionsheizelement" soll insbesondere ein gewickelter elektrischer Leiter verstanden werden, vorzugsweise in Form einer Kreisscheibe, der in zumindest einem Betriebszustand von hochfrequentem Wechselstrom durchflossen wird. Das Induktionsheizelement ist vorzugsweise dazu vorgesehen, elektrische Energie in ein magnetisches Wechselfeld umzuwandeln, das dazu vorgesehen ist, in einem metallischen, vorzugsweise zumindest teilweise ferromagnetischen, Heizmittel, insbesondere einem Gargeschirr, Wirbelströme und/oder Ummagnetisierungseffekte hervorzurufen, die in Wärme umgewandelt werden. Insbesondere weist die Kochfeldvorrichtung zumindest 2, vorteilhaft zumindest 4, besonders vorteilhaft zumindest 8, vorzugsweise zumindest 15 und besonders bevorzugt zumindest 25 Heizeinheiten auf. Insbesondere ist das Kochfeldelektronikmodul dazu vorgesehen, zumindest 2, vorteilhaft zumindest 4, besonders vorteilhaft zumindest 8 und vorzugsweise zumindest 15 Heizeinheiten zu versorgen. Unter einem "Kochfeldelektronikmodul" soll insbesondere eine elektrische und/oder elektronische Einheit verstanden werden, die zumindest eine Hauptplatine aufweist und zumindest zu einer Versorgung der Heizeinheit vorgesehen ist. Beispielsweise könnte die Versorgungseinheit zumindest einen Akkumulator zumindest zu einer Versorgung der Heizeinheit aufweisen. Insbesondere ist die Versorgungseinheit an zumindest eine Phase einer Stromversorgung angebunden. Insbesondere ist das Kochfeldelektronikmodul dazu vorgesehen, zumindest in einem Betriebszustand von zumindest einer Steuereinheit der Kochfeldvorrichtung zumindest einen Befehl zu empfangen und in Abhängigkeit von dem Befehl die Heizeinheit, insbesondere mit elektrischem Strom, zu versorgen. Insbesondere ist das Kochfeldelektronikmodul dazu vorgesehen, zumindest ein von der Heizeinheit detektiertes Sensorsignal zu empfangen und das empfangene Sensorsignal an die Steuereinheit zu übertragen. Unter einer "Verbindungseinheit" soll insbesondere eine Einheit verstanden werden, die durch zumindest ein Element der Heizeinheit und zumindest ein Element des Kochfeldelektronikmoduls gebildet ist. Insbesondere weist die Heizeinheit zumindest ein Trägerelement auf. Insbesondere weist das Kochfeldelektronikmodul zumindest ein weiteres Trägerelement auf. Insbesondere weist das Kochfeldelektronikmodul zumindest 2, vorteilhaft zumindest 4, besonders vorteilhaft zumindest 8 und vorzugsweise zumindest 15 weitere Trägerelemente auf, die vorzugsweise jeweils zu einer Versorgung einer Heizeinheit vorgesehen sind. Insbesondere sind das Trägerelement der Heizeinheit und das weitere Trägerelement des Kochfeldelektronikmoduls in verbundenem Zustand mittels der Verbindungseinheit in direktem, insbesondere einander berührendem Kontakt miteinander angeordnet. Insbesondere sind die Trägerelemente zumindest teilweise, insbesondere zu einem Massenanteil und/oder Volumenanteil von mehr als 70 %, insbesondere von mehr als 80 % und vorteilhaft von mehr als 90 %, aus Kunststoff ausgebildet. Insbesondere ist das Trägerelement der Heizeinheit zumindest im Wesentlichen einstückig mit zumindest einem Spulenträger der Heizeinheit ausgebildet. Beispielsweise könnten die Trägerelemente aus Polyphenylensulfid (PPS) ausgebildet sein. Alternativ sind weitere, einem Fachmann als sinnvoll erscheinende Kunststoffe denkbar. Insbesondere berühren die Heizeinheit und das Kochfeldelektronikmodul in verbundenem Zustand einander über eine Fläche von mehr als 1 mm², insbesondere von mehr als 3 mm² und vorteilhaft von mehr als 5 mm². Insbesondere berühren die Heizeinheit und das Kochfeldelektronikmodul in verbundenem Zustand einander über eine Fläche von weniger als 500 mm², insbesondere von weniger als 350 mm² und vorteilhaft von weniger als 250 mm². Unter der Wendung, dass die Verbindungseinheit dazu vorgesehen ist, die Heizeinheit und das Kochfeldelektronikmodul "zumindest im Wesentlichen starr" miteinander zu verbinden, soll insbesondere verstanden werden, dass zumindest in verbundenem Zustand, in dem die Heizeinheit und das Kochfeldelektronikmodul mittels der Verbindungseinheit verbunden sind, eine Bewegung des Kochfeldelektronikmoduls an eine Bewegung der Heizeinheit gekoppelt ist. Insbesondere ist das Kochfeldelektronikmodul zumindest in verbundenem Zustand um eine Strecke von weniger als 3 mm, insbesondere weniger als 2 mm, vorteilhaft weniger als 1 mm und vorzugsweise weniger als 0,5 mm relativ zu der Heizeinheit bewegbar. Unter der Wendung, dass die Verbindungseinheit dazu vorgesehen ist, die Heizeinheit und das Kochfeldelektronikmodul "direkt" miteinander zu verbinden, soll insbesondere verstanden werden, dass die Heizeinheit zumindest in einem Betriebszustand zumindest einen Teil einer Gewichtskraft des Kochfeldelektronikmoduls aufnimmt und/oder dass die Heizeinheit und das Kochfeldelektronikmodul zumindest über eine kraftübertragende Verbindungsstrecke verbunden sind, wobei auf weitere Bauteile, insbesondere auf gehäusebildende Bauteile, vorteilhaft von der Heizeinheit und dem Kochfeldelektronikmodul getrennt ausgebildete Bauteile, entlang der Verbindungsstrecke verzichtet wird. Insbesondere wird entlang der Verbindungsstrecke auf weitere Bauteile, die mit zumindest zwei Heizeinheiten in Kontakt stehen, verzichtet. Insbesondere sind gehäusebildende Bauteile, insbesondere zumindest eine Abdeckeinheit, über getrennt von der Heizeinheit ausgebildete Bauteile mit der Platteneinheit verbunden, insbesondere an der Platteneinheit befestigt. Insbesondere ist ein Gewicht der gehäusebildenden Bauteile, insbesondere der Abdeckeinheit, zu einem Anteil von mehr als 70 %, insbesondere von mehr als 80 % und vorteilhaft von mehr als 90 % von einer von der Verbindungseinheit getrennt ausgebildeten Einheit getragen. Insbesondere ist die Verbindungseinheit lediglich mit der Heizeinheit und mit dem Kochfeldelektronikmodul in Kontakt angeordnet, insbesondere ist ein Kontakt zwischen der Verbindungseinheit und den gehäusebildenden Bauteilen, insbesondere der Abdeckeinheit, vermieden. Insbesondere ist die Verbindungseinheit dazu vorgesehen, die Heizeinheit und das Kochfeldelektronikmodul unter Vermeidung zumindest eines Bauteils zwischen der Heizeinheit und dem Kochfeldelektronikmodul miteinander zu verbinden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere eine stabile Ausgestaltung der Kochfeldvorrichtung und/oder kurze Montagezeit erreicht werden. Zudem kann vorteilhaft eine stabile und/oder sichere Verbindung zwischen der Heizeinheit und dem Kochfeldelektronikmodul erreicht werden. Ferner kann vorteilhaft eine geringe Fehlerquote bei einem Herstellen einer Verbindung zwischen der Heizeinheit und dem Kochfeldelektronikmodul erreicht werden. Dadurch kann vorteilhaft eine geringe Montagezeit und/oder eine preiswerte Ausgestaltung erreicht werden. Weiterhin kann eine platzsparende Anordnung und/oder eine geringe Anzahl an Bauelementen erreicht werden. Insbesondere kann auf eine Verwendung von Brücken, Federn und/oder Kabeln verzichtet werden.

Ferner wird vorgeschlagen, dass die Verbindungseinheit zumindest eine Rasteinheit aufweist, die dazu vorgesehen ist, die Heizeinheit und das Kochfeldelektronikmodul mechanisch miteinander zu verbinden. Insbesondere weist ein erstes der Trägerelemente zumindest ein Rastelement auf, das bei einem Befestigungsvorgang elastisch ausgelenkt wird, um anschließend durch eine innere Spannkraft hinter einem korrespondierenden Rastelement des zweiten der Trägerelemente einzurasten. Dadurch kann vorteilhaft eine stabile und/oder lösbare Verbindung zwischen der Heizeinheit und dem Kochfeldelektronikmodul erreicht werden.

Erfindungsgemäß weist die Verbindungseinheit zumindest eine elektrische Verbindungseinheit auf, die dazu vorgesehen ist, die Heizeinheit und das Kochfeldelektronikmodul elektrisch miteinander zu verbinden. Unter einer "elektrischen Verbindungseinheit" soll insbesondere eine Einheit verstanden werden, die dazu vorgesehen ist, bei einem Befestigungsvorgang einen elektrischen und/oder elektronischen Kontakt zwischen der Heizeinheit und dem Kochfeldelektronikmodul herzustellen. Insbesondere umfasst ein erstes der Trägerelemente zumindest einen Stecker und ein zweites der Trägerelemente zumindest eine zu dem Stecker des ersten Trägerelements korrespondierende Buchse. Alternativ ist denkbar, dass jedes Trägerelement zumindest einen Stecker und zumindest eine Buchse umfasst. Insbesondere ist zumindest in montiertem Zustand ein elektrischer Kontakt zwischen der Buchse des zweiten Trägerelements und dem Stecker des ersten Trägerelements hergestellt. Dadurch kann vorteilhaft eine funktionsfähige und/oder störungsarme Versorgung der Heizeinheit erreicht werden.

Weiterhin wird vorgeschlagen, dass die Kochfeldvorrichtung zumindest eine Befestigungseinheit umfasst, die in montiertem Zustand an der Platteneinheit befestigt ist und zumindest eine Ausnehmung zu einer Aufnahme der Heizeinheit aufweist. Unter einer "Befestigungseinheit" soll insbesondere eine Einheit verstanden werden, die dazu vorgesehen ist, zumindest die Heizeinheit an der Platteneinheit, insbesondere lösbar, zu befestigen. Insbesondere ist die Befestigungseinheit dazu vorgesehen, die Heizeinheit in der Ausnehmung der Befestigungseinheit zumindest teilweise, insbesondere zu einem Massenanteil und/oder Volumenanteil von mehr als 70 %, insbesondere von mehr als 80 % und vorteilhaft von mehr als 90 %, aufzunehmen. Insbesondere umgibt, vorteilhaft umschließt, die Befestigungseinheit zumindest in montiertem Zustand die Heizeinheit bezüglich eines Schwerpunkts der Heizeinheit auf zumindest einer Ebene über einen Winkelbereich von mehr als 90°, insbesondere von mehr als 180°, vorteilhaft von mehr als 270° und bevorzugt von mehr als 330°. Insbesondere ist die Befestigungseinheit zumindest teilweise, insbesondere zu einem Massenanteil und/oder Volumenanteil von mehr als 70 %, insbesondere von mehr als 80 % und vorteilhaft von mehr als 90 %, aus Kunststoff ausgebildet. Beispielsweise könnte die Befestigungseinheit aus Polyphenylensulfid (PPS) und/oder Polyetheretherketon (PEEK) ausgebildet sein. Alternativ sind weitere, einem Fachmann als sinnvoll erscheinende Kunststoffe denkbar. Insbesondere ist die Befestigungseinheit zumindest in montiertem Zustand an die

Platteneinheit geklebt. Alternativ sind weitere, einem Fachmann als sinnvoll erscheinende Befestigungsmöglichkeiten denkbar. Insbesondere ist die Befestigungseinheit zumindest im Wesentlichen temperaturresistent ausgebildet. Unter einer "zumindest im Wesentlichen temperaturresistenten" Befestigungseinheit soll insbesondere verstanden werden, dass sich die Befestigungseinheit bis zu einer Temperatur von mehr als 200°C, vorteilhaft von mehr als 250°C und insbesondere von mehr als 280°C in funktionsfähigem Zustand befindet. Insbesondere befindet sich die Befestigungseinheit bis zu einer Temperatur von weniger als 500°C, insbesondere von weniger als 400°C und vorteilhaft von weniger als 350°C in funktionsfähigem Zustand. Alternativ zu einer Befestigung der Heizeinheit an der Platteneinheit mittels der Befestigungseinheit könnte die Heizeinheit direkt an der Platteneinheit befestigt sein, beispielsweise könnte die Heizeinheit an die Platteneinheit geklebt sein. Dadurch kann vorteilhaft eine stabile Befestigung der Heizeinheit an der Platteneinheit erreicht werden.

Ferner wird vorgeschlagen, dass die Kochfeldvorrichtung zumindest eine weitere Rasteinheit, mittels der die Heizeinheit zumindest in montiertem Zustand mit der Befestigungseinheit mechanisch verbunden ist, aufweist. Insbesondere ist die Heizeinheit mittels der weiteren Rasteinheit zumindest in montiertem Zustand in der Ausnehmung der Befestigungseinheit mechanisch verrastet. Insbesondere ist die Rasteinheit durch ein Zusammenwirken von zumindest einer Ausformung und zumindest einem Laschenelement, das bei einem Befestigungsvorgang elastisch ausgelenkt wird, um anschließend durch eine innere Spannkraft hinter der zu dem Laschenelement korrespondierenden Ausformung einzurasten. Beispielsweise weist die Heizeinheit das Laschenelement und die Befestigungseinheit in einem Bereich der Ausnehmung die Ausformung auf. Ebenfalls denkbar ist, dass die Befestigungseinheit in einem Bereich der Ausnehmung das Laschenelement und die Heizeinheit die Ausformung aufweist. Alternativ zu der weiteren Rasteinheit könnte die Heizeinheit an der Befestigungseinheit mittels zumindest eines Befestigungsmittels, beispielsweise einer Schraube und/oder eines Riegels, und/oder mittels einer Klebung verbunden sein. Zudem sind weitere, einem Fachmann als sinnvoll erscheinende Verbindungsmöglichkeiten denkbar. Dadurch kann vorteilhaft die Heizeinheit lösbar und/oder in kurzer Zeit an der Platteneinheit befestigt werden.

Zudem wird vorgeschlagen, dass die Kochfeldvorrichtung zumindest eine Abstützeinheit aufweist, die das Kochfeldelektronikmodul zumindest in montiertem Zustand an, insbesondere zumindest einer Bodenseite, zumindest einer Abdeckeinheit abstützt. Insbesondere ist die Abstützeinheit dazu vorgesehen, zumindest in montiertem Zustand einen direkten Kontakt des Kochfeldelektronikmoduls mit der Abdeckeinheit zu vermeiden. Insbesondere ist die Abstützeinheit dazu vorgesehen, zumindest eine Gewichtskraft des Kochfeldelektronikmoduls zumindest teilweise zu tragen und/oder die Gewichtskraft des Kochfeldelektronikmoduls an die Abdeckeinheit abzuleiten. Insbesondere ist die Abstützeinheit dazu vorgesehen, zumindest in montiertem Zustand mit der Verbindungseinheit zusammenzuwirken, insbesondere eine auf die Verbindungseinheit einwirkende Gewichtskraft des Kochfeldelektronikmoduls zu reduzieren. Unter einer "Abdeckeinheit" soll insbesondere eine Einheit verstanden werden, die dazu vorgesehen ist, zusammen mit der Platteneinheit zumindest ein Außengehäuse auszubilden. Insbesondere ist die Abdeckeinheit dazu vorgesehen, in dem befestigten Zustand das Kochfeld zumindest in einer der Kochfeldplatte abweisenden Richtung zu begrenzen. Dadurch kann vorteilhaft das Kochfeldelektronikmodul stabil angeordnet werden, wodurch eine langlebige und/oder funktionstüchtige Kochfeldvorrichtung erreicht werden kann.

Weiterhin wird vorgeschlagen, dass die Abstützeinheit zumindest ein Federelement aufweist, das das Kochfeldelektronikmodul zumindest in montiertem Zustand gegen die Heizeinheit drückt. Insbesondere weist die Abstützeinheit, insbesondere für jedes Kochfeldelektronikmodul, zumindest 2, insbesondere zumindest 3 und vorteilhaft zumindest 4 Federelemente auf. Insbesondere weist die Abstützeinheit, insbesondere für jedes Kochfeldelektronikmodul, maximal 15, insbesondere maximal 12 und vorteilhaft maximal 9 Federelemente auf. Insbesondere drückt das Federelement zumindest in montiertem Zustand das Kochfeldelektronikmodul zumindest teilweise in Richtung der Heizeinheit. Beispielsweise könnte das Federelement als eine Torsionsfeder, eine Blattfeder und/oder eine Spiralfeder ausgebildet sein. Ebenfalls denkbar ist, dass das Federelement einstückig mit einem elastisch ausgebildeten Abstützelement der Abstützeinheit ausgebildet ist. Insbesondere stützt sich das Federelement mit einem ersten Ende des Federelements, insbesondere direkt und/oder indirekt, an der Bodenseite der Abdeckeinheit ab. Insbesondere drückt das Federelement mit einem dem ersten Ende entgegengesetzten zweiten Ende gegen das Kochfeldelektronikmodul. Insbesondere erzeugt die Abstützeinheit mittels des Federelements eine Anpresskraft, die ausgehend von der Abdeckeinheit in Richtung der Platteneinheit gerichtet ist. Dadurch kann vorteilhaft eine langlebige Verbindung zwischen der Heizeinheit und dem Kochfeldelektronikmodul erreicht werden.

Ferner wird vorgeschlagen, dass die Abstützeinheit zumindest in montiertem Zustand das Kochfeldelektronikmodul in zumindest einer lateralen Richtung ausrichtet, insbesondere zentriert, vorteilhaft abstützt. Insbesondere ist die laterale Richtung zumindest in montiertem Zustand zumindest im Wesentlichen parallel zu der Platteneinheit ausgerichtet. Dadurch kann vorteilhaft eine stabile Positionierung des Kochfeldelektronikmoduls erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Kochfeld mit einer erfindungsgemäßen Kochfeldvorrichtung in einer schematischen Draufsicht,
- Fig. 2: einen Ausschnitt des erfindungsgemäßen Kochfelds mit der erfindungsgemäßen Kochfeldvorrichtung aus Fig. 1 in einer schematischen Rückansicht in einer Explosionsdarstellung,
- Fig. 3: eine erfindungsgemäße Befestigungseinheit mit einer erfindungsgemäßen Heizeinheit in einer schematischen Darstellung,
- Fig. 4: einen Teil eines erfindungsgemäßen Kochfeldelektronikmoduls in einer schematischen Darstellung,
- Fig. 5: einen Ausschnitt eines weiteren Ausführungsbeispiels eines erfindungsgemäßen Kochfelds mit der erfindungsgemäßen Kochfeldvorrichtung in einer schematischen Rückansicht in einer Explosionsdarstellung und
- Fig. 6: einen Ausschnitt eines weiteren Ausführungsbeispiels eines erfindungsgemäßen Kochfelds mit der erfindungsgemäßen Kochfeldvorrichtung in einer schematischen Rückansicht in einer Explosionsdarstellung.

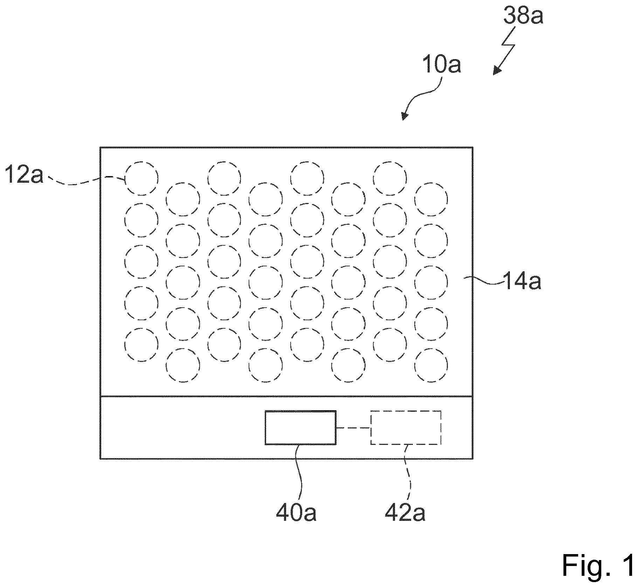

Fig. 1 zeigt ein erfindungsgemäßes Kochfeld 38a, das als ein Induktionskochfeld ausgebildet ist, mit einer erfindungsgemäßen Kochfeldvorrichtung 10a, die als eine Induktionskochfeldvorrichtung ausgebildet ist. Die Kochfeldvorrichtung 10a weist eine Platteneinheit 14a zu einem Aufstellen von Gargeschirren auf. Die Platteneinheit 14a ist als eine Kochfeldplatte ausgebildet. Die Kochfeldvorrichtung 10a weist vierzig Heizeinheiten 12a auf, die unterhalb der Platteneinheit 14a angeordnet sind. Von mehrfach vorhandenen Bauteilen ist in Fig. 1 bis Fig. 6 der Übersichtlichkeit halber lediglich jeweils eines mit einem Bezugszeichen versehen. Die Heizeinheiten 12a, die als Induktionsheizeinheiten ausgebildet sind, sind jeweils dazu vorgesehen, ein auf der Platteneinheit 14a oberhalb einer der Heizeinheiten 12a aufgestelltes Gargeschirr zu erhitzen. Jede der Heizeinheiten 12a ist im Wesentlichen kreisförmig ausgebildet und weist einen Durchmesser von im Wesentlichen 78 mm auf. Die Heizeinheiten 12a sind in einem Raster, insbesondere mit hexagonaler Struktur, unterhalb der Platteneinheit 14a angeordnet. Die Heizeinheiten 12a bilden eine variable Kochfläche aus. Das Kochfeld 38a ist als ein Matrixkochfeld ausgebildet. In montiertem Zustand sind die Heizeinheiten 12a an der Platteneinheit 14 befestigt.

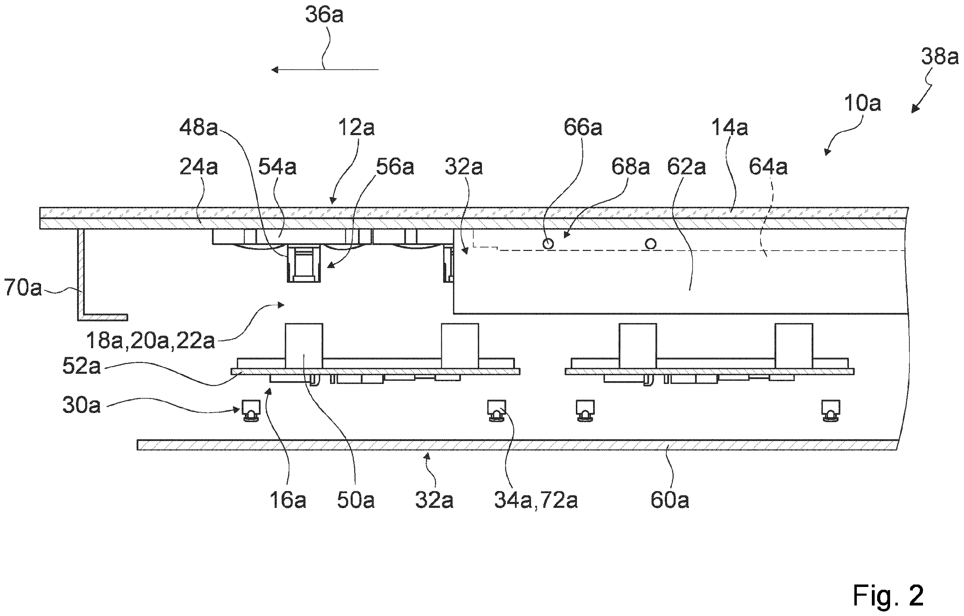

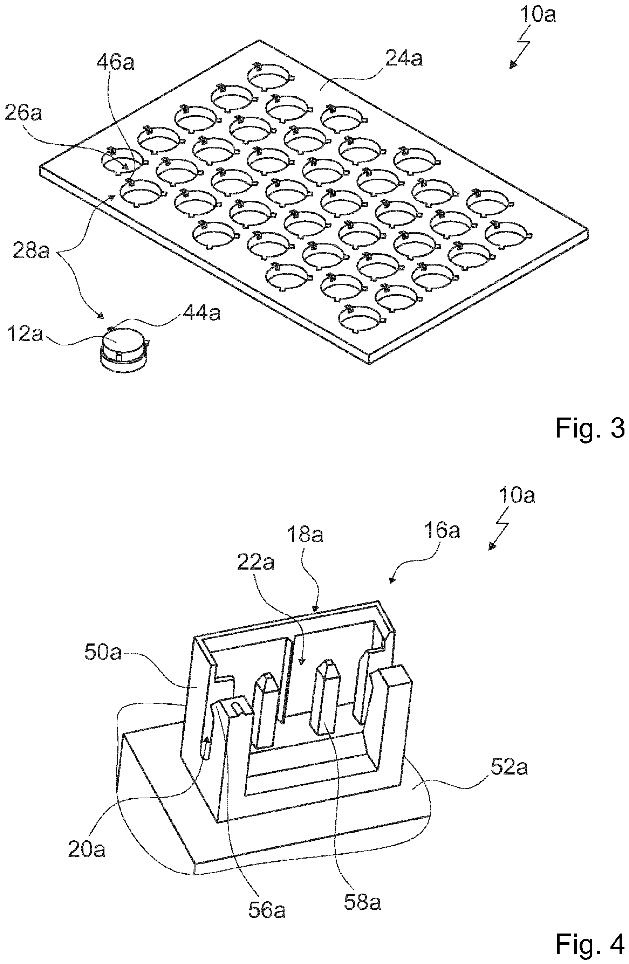

Die Kochfeldvorrichtung 10a umfasst eine Befestigungseinheit 24a, die in montiertem Zustand an der Platteneinheit 14a befestigt ist (vgl. Fig. 3). In montiertem Zustand ist die Befestigungseinheit 24a an der Platteneinheit 14a durch eine Klebeverbindung befestigt. Die Befestigungseinheit 24a ist als ein im Wesentlichen plattenförmiges Bauteil ausgebildet und weist eine Größe von im Wesentlichen 900 x 600 x 10 mm³ auf. Die Befestigungseinheit 24a ist im Wesentlichen aus Kunststoff ausgebildet. Zudem ist die Befestigungseinheit 24a im Wesentlichen temperaturresistent ausgebildet. Die Befestigungseinheit 24a ist bis zu einer Temperatur von im Wesentlichen 320°C in einem funktionsfähigen Zustand. Die Befestigungseinheit 24a weist vierzig Ausnehmungen 26a zu einer Aufnahme der Heizeinheiten 12a auf. In Fig. 2 ist der Übersichtlichkeit halber lediglich eine der Heizeinheiten 12a dargestellt. Eine Anzahl an Ausnehmungen 26a in der Befestigungseinheit 24a und eine Anzahl an Heizeinheiten 12a ist im Wesentlichen gleich. Jede Ausnehmung 26a ist im Wesentlichen kreisförmig ausgebildet und weist einen Durchmesser von im Wesentlichen 80 mm auf. Zu einer Befestigung der Heizeinheiten 12a in den entsprechenden Ausnehmungen 26a der Befestigungseinheit 24a umfasst die Kochfeldvorrichtung 10a vierzig weitere Rasteinheiten 28a, mittels der die Heizeinheiten 12a in montiertem Zustand mit der Befestigungseinheit 24a mechanisch verbunden sind. Eine Anzahl an weiteren Rasteinheiten 28a und eine Anzahl an Heizeinheiten 12a ist im Wesentlichen gleich. Jede Heizeinheit 12a weist drei Laschenelemente 44a auf, die bezüglich eines Schwerpunkts der Heizeinheit 12a gleichmäßig verteilt um die Heizeinheit 12a herum angeordnet sind. Die Befestigungseinheit 24a weist für jede der Ausnehmungen 26a drei Ausformungen 46a auf, die bezüglich eines Mittelpunkts jeder Ausnehmung 26a gleichmäßig verteilt an einer seitlichen Begrenzungsfläche jeder Ausnehmung 26a angeordnet sind. Die Laschenelemente 44a jeder Heizeinheit 12a und die Ausformungen 46a, die an der seitlichen Begrenzungsfläche jeder Ausnehmung 26a der Befestigungseinheit 24a angeordnet sind, sind an einander korrespondierenden Stellen angeordnet und zueinander kompatibel ausgebildet. Bei einem erfindungsgemäßen Verfahren zu einer Montage der Kochfeldvorrichtung 10a wird zunächst die Befestigungseinheit 24a an der Platteneinheit 14a befestigt. Anschließend werden die Heizeinheiten 12a mittels der Befestigungseinheit 24a an der Platteneinheit 14a befestigt. Bei einem Befestigungsvorgang der Heizeinheiten 12a in einer korrespondierenden Ausnehmung 26a der Befestigungseinheit 24a werden die Laschenelemente 44a einer Heizeinheit 12a elastisch ausgelenkt aufgrund eines Kontakts mit der seitlichen Begrenzungsfläche einer Ausnehmung 26a. Sobald eine der Heizeinheiten 12a genügend weit in einer der Ausnehmungen 26a aufgenommen ist, rasten die Laschenelemente 44a der Heizeinheit 12a durch eine innere Spannkraft hinter den zu den Laschenelementen 44a korrespondierenden Ausformungen 46a ein. Somit sind die Heizeinheiten 12a mittels der Befestigungseinheit 24a lösbar an der Platteneinheit 14a befestigt.

Die Kochfeldvorrichtung 10a weist in einem in eingebautem Zustand einem Bediener zuweisenden Bereich eine Bedieneinheit 40a zu einer Eingabe von Betriebsparametern auf (vgl. Fig. 1). Beispielsweise sind die Betriebsparameter als Auswahl und/oder Veränderung einer Heizzone und/oder als eine Einstellung einer Heizleistung und/oder Heizleistungsdichte einer Heizzone ausgebildet. Weiterhin weist die Kochfeldvorrichtung 10a eine Steuereinheit 42a auf, die dazu vorgesehen ist, in Abhängigkeit der mittels der Bedieneinheit 40a eingegebenen Betriebsparameter Aktionen auszuführen und/oder Einstellungen zu verändern.

Die Kochfeldvorrichtung 10a umfasst zwei Kochfeldelektronikmodule 16a zu einer Versorgung der Heizeinheit 12a (vgl. Fig. 2). Die Kochfeldelektronikmodule 16a sind in montiertem Zustand unterhalb der Heizeinheiten 12a angeordnet. Hierbei ist jeweils ein Kochfeldelektronikmodul 16a unterhalb von zwei benachbart angeordneten Heizeinheiten 12a angeordnet. Die Kochfeldvorrichtung 10a umfasst vierzig Verbindungseinheiten 18a, die jeweils dazu vorgesehen sind, eine der Heizeinheiten 12a und eines der Kochfeldelektronikmodule 16a direkt und im Wesentlichen starr miteinander zu verbinden. Eine Anzahl an Verbindungseinheiten 18a und eine Anzahl an Heizeinheiten 12a ist im Wesentlichen gleich. Jede Heizeinheit 12a weist ein Trägerelement 48a auf. Jedes Trägerelement 48a ist einstückig mit einem Spulenträger 54a der Heizeinheit 12a ausgebildet und in montiertem Zustand an einer von der Platteneinheit 14a wegweisenden Seite der Heizeinheit 12a angeordnet. Jedes Kochfeldelektronikmodul 16a weist ein weiteres Trägerelement 50a auf. Jedes weitere Trägerelement 50a ist auf einer Platine 52a des Kochfeldelektronikmoduls 16a montiert und in montiertem Zustand an einer der Platteneinheit 14a zuweisenden Seite der Platine 52a des Kochfeldelektronikmoduls 16a angeordnet. In montiertem, verbundenem Zustand sind die Trägerelemente 48a, 50a mittels der Verbindungseinheit 18a in direktem, einander berührendem Kontakt miteinander angeordnet.

Ein Abstand zwischen einem Schwerpunkt einer Heizeinheit 12a und einem Schwerpunkt eines mit der Heizeinheit 12a verbundenen Kochfeldelektronikmoduls 16a beträgt im Wesentlichen 22 mm, wobei der Abstand im Wesentlichen senkrecht zu der Platteneinheit 14a ausgerichtet ist. Dieser Abstand zwischen einem Schwerpunkt einer Heizeinheit 12a und einem Schwerpunkt eines mit der Heizeinheit 12a verbundenen Kochfeldelektronikmoduls 16a ist ausreichend um das Kochfeldelektronikmodul 16a gegen von der Heizeinheit 12a erzeugte Hitze abzuschirmen. Zu einer Abschirmung des Kochfeldelektronikmoduls 16a gegenüber von der Heizeinheit 12a erzeugter elektromagnetischer Strahlung umfasst die Heizeinheit 12a ein Abschirmelement (nicht dargestellt), das beispielsweise aus Aluminium ausgebildet sein könnte. Alternativ sind weitere, einem Fachmann als sinnvoll erscheinende Abschirmelemente denkbar.

Jede Verbindungseinheit 18a weist eine Rasteinheit 20a auf, die dazu vorgesehen ist, eine der Heizeinheiten 12a und eines der Kochfeldelektronikmodule 16a mechanisch miteinander zu verbinden (vgl. Fig. 2 und Fig. 4). Jedes Trägerelement 48a weist zwei Rastelemente 56a auf, die jeweils mit einem korrespondierenden Rastelement 56a eines zu dem Trägerelement 48a korrespondierenden weiteren Trägerelement 50a zusammenwirken. Fig. 4 zeigt ein weiteres Trägerelement 50a eines Kochfeldelektronikmoduls 16a, wobei in einer lateralen Richtung 36a an jeder Seite des Trägerelements 50a jeweils ein Rastelement 56a angeordnet ist. Jede Verbindungseinheit 18a weist eine elektrische Verbindungseinheit 22a auf, die dazu vorgesehen ist, eine der Heizeinheiten 12a und eines der Kochfeldelektronikmodule 16a elektrisch miteinander zu verbinden. Jedes weitere Trägerelement 50a eines Kochfeldelektronikmoduls 16a umfasst zwei Stecker 58a. Jedes Trägerelement 48a einer Heizeinheit 12a umfasst zwei zu den Steckern 58a eines korrespondierenden Kochfeldelektronikmoduls 16a korrespondierende Buchsen. In montiertem Zustand sind die Stecker 58a eines Kochfeldelektronikmoduls 16a in den Buchsen einer Heizeinheit 12a aufgenommen. Hierdurch ist die Heizeinheit 12a mittels der elektrischen Verbindungseinheit 22a mit dem Kochfeldelektronikmodul 16a elektrisch zu einer Versorgung der Heizeinheit 12a verbunden.

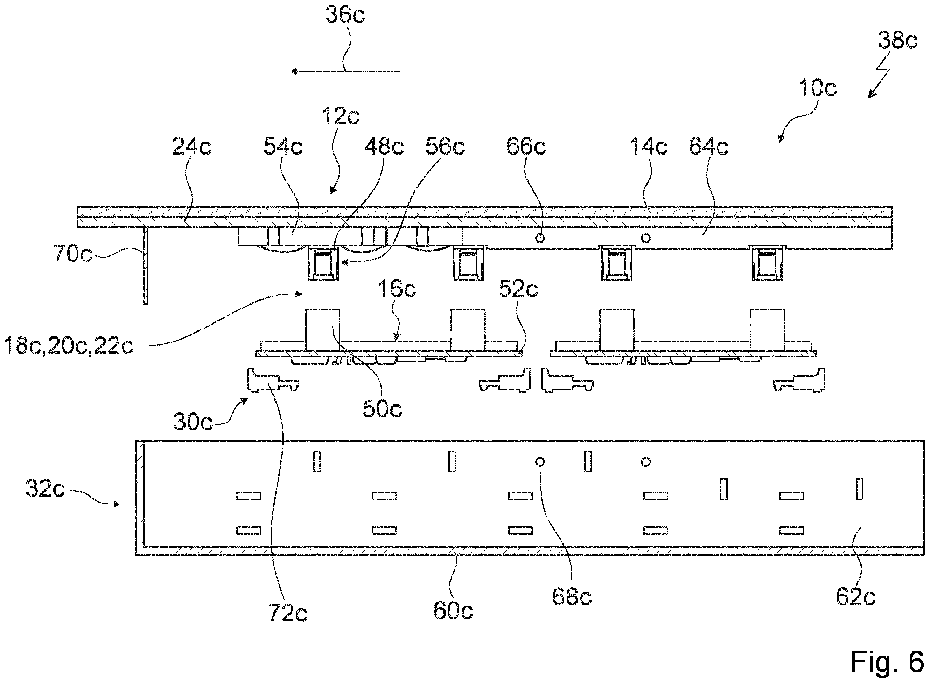

An einer in montiertem Zustand von der Platteneinheit 14a wegweisenden Seite umfasst die Kochfeldvorrichtung 10a eine Abdeckeinheit 32a, die zusammen mit der Platteneinheit 14a ein Außengehäuse des Kochfelds 38a ausbildet. Die Kochfeldvorrichtung 10a umfasst eine Abstützeinheit 30a, die die Kochfeldelektronikmodule 16a in montiertem Zustand an der Abdeckeinheit 32a abstützt. Für jedes Kochfeldelektronikmodul 16a weist die Abstützeinheit 30a acht Abstützelemente 72a auf. Zudem weist die Abstützeinheit 30a für jedes Kochfeldelektronikmodul 16a acht Federelemente 34a auf. Die Abstützelemente 72a und die Federelemente 34a sind einstückig ausgebildet. Die Federelemente 34a sind im Wesentlichen aus Kunststoff ausgebildet. Die Federelemente 34a sind in einer Bodenseite 60a der Abdeckeinheit 32a verrastet. Alternativ ist denkbar, dass die Federelemente mit der Bodenseite der Abdeckeinheit verschraubt sind. Zudem sind weitere, einem Fachmann als sinnvoll erscheinende Befestigungsmöglichkeiten denkbar. Mittels der Federelemente 34a sind die Kochfeldelektronikmodule 16a gegenüber der Abdeckeinheit 32a abgestützt und gefedert. In montiertem Zustand drücken die Federelemente 34a das Kochfeldelektronikmodul 16a gegen die Heizeinheit 12a. Die Federelemente 34a definieren in montiertem Zustand eine Distanz zwischen einem der Kochfeldelektronikmodule 16a und der Abdeckeinheit 32a. Diese Distanz entspricht einem vorgegebenen Normabstand zwischen Kochfeldelektronikmodul 16a und Bodenseite 60a der Abdeckeinheit 32a. Die Abdeckeinheit 32a ist mehrteilig ausgebildet und weist die Bodenseite 60a sowie vier Seitenwände 62a auf. Die Seitenwände 62a sind in montiertem Zustand jeweils an einem Strukturbauteil 64a befestigt (vgl. auch Fig. 6), wobei das Strukturbauteil 64a seinerseits an der Platteneinheit 14a befestigt ist. Das Strukturbauteil 64a ist mittels einer Klebeverbindung an der Platteneinheit 14a befestigt. Alternativ sind weitere, einem Fachmann als sinnvoll erscheinende Verbindungsmöglichkeiten denkbar. Das Strukturbauteil 64a weist mehrere Vorsprünge 66a zu einer Befestigung der Abdeckeinheit 32a auf. Die Abdeckeinheit 32a weist in einer der Seitenwände 62a mehrere Öffnungen 68a auf, die in montiertem Zustand mit den Vorsprüngen 66a des Strukturbauteils 64a zusammenwirken. Bei einem Befestigungsvorgang werden die Seitenwände 62a der Abdeckeinheit 32a elastisch ausgelenkt und mit den Öffnungen 68a über die Vorsprünge 66a des Strukturbauteils 64a gestülpt. Somit ist die Abdeckeinheit 32a mittels des Strukturbauteils 64a lösbar an der Platteneinheit 14a befestigt. Die Abdeckeinheit 32a ist korrekt positioniert und an dem Strukturbauteil 64a befestigt, sofern zwischen den Vorsprüngen 66a des Strukturbauteils 64a und den Öffnungen 68a der Abdeckeinheit 32a etwas Spiel ist. Alternativ oder zusätzlich zu einer elastisch ausgebildeten Abdeckeinheit ist denkbar, dass das Strukturbauteil elastisch ausgebildet ist.

Die Kochfeldvorrichtung 10a umfasst einen Kochfeldrahmen 70a zu einer Befestigung der Abdeckeinheit 32a. Der Kochfeldrahmen 70a weist eine im Wesentlichen L-förmige Gestalt auf. Der Kochfeldrahmen 70a erstreckt sich über vier Seiten der Platteneinheit 14a. Der Kochfeldrahmen 70a ist im Wesentlichen aus Metall ausgebildet. Beispielsweise könnte der Kochfeldrahmen 70a aus Stahl ausgebildet sein. Alternativ sind weitere, einem Fachmann als sinnvoll erscheinende Metalle denkbar. Der Kochfeldrahmen 70a ist in montiertem Zustand an der Platteneinheit 14a befestigt. Eine Höhe des Kochfeldrahmens 70a entspricht im Wesentlichen einer Höhe der Seitenwände 62a der Abdeckeinheit 32a.

Nach einer Befestigung der Heizeinheiten 12a mittels der Befestigungseinheit 24a an der Platteneinheit 14a werden die Heizeinheiten 12a und die Kochfeldelektronikmodule 16a mittels der Verbindungseinheit 18a miteinander verbunden. Anschließend werden die Seitenwände 62a der Abdeckeinheit 32a mittels der Strukturbauteile 64a an der Platteneinheit 14a befestigt. In einem weiteren Verfahrensschritt wird die Bodenseite 60a der Abdeckeinheit 32a mit den in der Bodenseite 60a befestigten Federelementen 34a an dem Kochfeldrahmen 70a befestigt. Die Bodenseite 60a wird mittels einer Schraubverbindung an dem Kochfeldrahmen 70a befestigt. Alternativ könnte die Bodenseite 60a mittels einer Rastverbindung an dem Kochfeldrahmen 70a befestigt werden. Alternativ sind weitere, einem Fachmann als sinnvoll erscheinende Verbindungsmöglichkeiten denkbar. Mittels der Befestigung der Bodenseite 60a an dem Kochfeldrahmen 70a wird ein direkter Kontakt zwischen den in der Bodenseite 60a befestigten Federelementen 34a und den Kochfeldelektronikmodulen 16a hergestellt. Hierdurch drücken die Federelemente 34a die Kochfeldelektronikmodule 16a gegen die Heizeinheiten 12a.

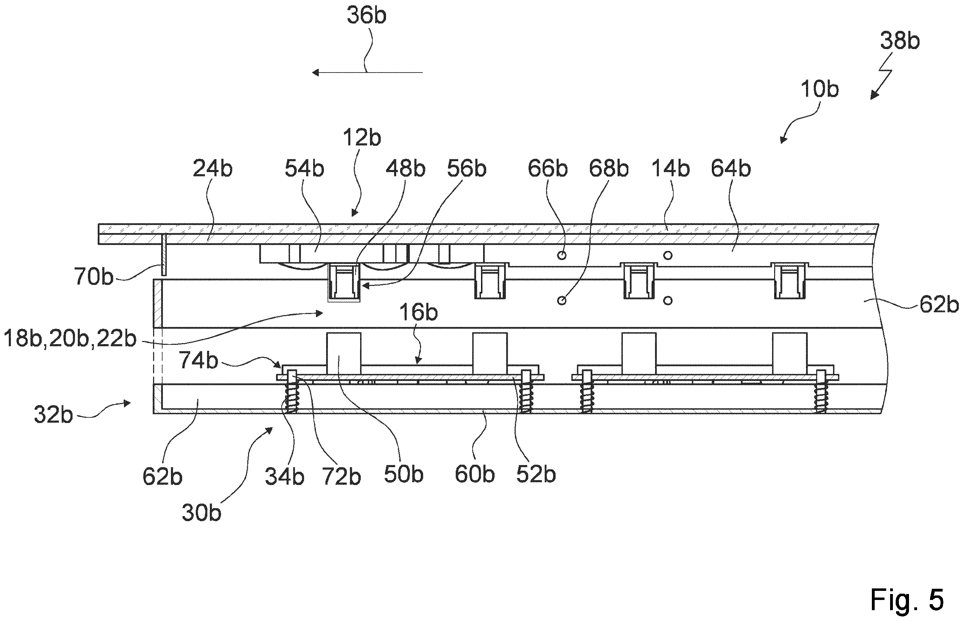

In Fig. 5 und 6 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Fig. 1 bis 4, verwiesen werden kann. Zur Unterscheidung der Ausführungsbeispiele ist der Buchstabe a in den Bezugszeichen des Ausführungsbeispiels in Fig. 1 bis 4 durch die Buchstaben b und c in den Bezugszeichen der Ausführungsbeispiele der Fig. 5 und 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Fig. 1 bis 4, verwiesen werden.

Fig. 5 zeigt eine als eine Induktionskochfeldvorrichtung ausgebildete Kochfeldvorrichtung 10b mit vierzig als Induktionsheizeinheiten ausgebildete Heizeinheiten 12b, die in montiertem Zustand an einer Platteneinheit 14b befestigt sind. Die Heizeinheiten 12b sind mittels einer weiteren Rasteinheit 28b einer Befestigungseinheit 24b, die in montiertem Zustand an der Platteneinheit 14b befestigt ist und vierzig Ausnehmungen 26b zu einer Aufnahme der Heizeinheiten 12b aufweist, an der Platteneinheit 14b befestigt. Die Kochfeldvorrichtung 10b umfasst zwei Kochfeldelektronikmodule 16b zu einer Versorgung der Heizeinheiten 12b. Die Kochfeldvorrichtung 10b umfasst vierzig Verbindungseinheiten 18b, die jeweils dazu vorgesehen sind, eine der Heizeinheiten 12b und eines der Kochfeldelektronikmodule 16b direkt und im Wesentlichen starr miteinander zu verbinden. Hierbei ist eine Heizeinheit 12b mit einem der Kochfeldelektronikmodule 16b mechanisch mittels einer Rasteinheit 20b der Verbindungseinheit 18b und elektrisch mittels einer elektrischen Verbindungseinheit 22b der Verbindungseinheit 18b verbunden.

Die Kochfeldvorrichtung 10b umfasst eine Abdeckeinheit 32b, die eine Bodenseite 60b und vier Seitenwände 62b aufweist. Die Bodenseite 60b und die Seitenwände 62b sind einstückig und die Abdeckeinheit 32b einteilig ausgebildet. In Fig. 5 ist die Abdeckeinheit 32b aufgrund einer Übersichtlichkeit und zur besseren Darstellung mehrteilig sowie nur teilweise dargestellt. Die Abdeckeinheit 32b ist mittels mehrerer an der Platteneinheit 14b befestigter Strukturbauteile 64b sowie mittels eines Kochfeldrahmens 70b an der Platteneinheit 14b befestigt.

Die Kochfeldvorrichtung 10b umfasst eine Abstützeinheit 30b, die die Kochfeldelektronikmodule 16b in montiertem Zustand an der Abdeckeinheit 32b abstützt. Die Abstützeinheit 30b umfasst für jedes der Kochfeldelektronikmodule 16b vier Abstützelemente 72b, die das Kochfeldelektronikmodul 16b in montiertem Zustand an der Abdeckeinheit 32b abstützen und zentrieren. Zudem umfasst die Abstützeinheit zwei Abstützelemente, die in montiertem Zustand ein Gebläse (nicht dargestellt) der Kochfeldvorrichtung in Richtung der Platteneinheit drücken und das Gebläse auf einer Höhe mit den Kochfeldelektronikmodulen halten. Die Abstützeinheit umfasst zwei Abstützelemente, die in montiertem Zustand einen Kühler (nicht dargestellt) der Kochfeldvorrichtung in Richtung der Platteneinheit drücken und den Kühler auf einer Höhe mit den Kochfeldelektronikmodulen halten.

Die Abstützelemente 72b sind im Wesentlichen stabförmig ausgebildet. Die Abstützelemente 72b weisen einen Durchmesser von im Wesentlichen 3 mm und eine Höhe von im Wesentlichen 35 mm auf. In montiertem Zustand sind die Abstützelemente 72b mit ihrer im Wesentlichen kreisrunden Bodenfläche an der Bodenseite 60b der Abdeckeinheit 32b befestigt. Hierbei sind die Abstützelemente 72b mittels einer Nietverbindung an der Abdeckeinheit 32b befestigt. Ebenfalls denkbar ist, dass die Abstützelemente 72b mittels einer Schraubverbindung an der Abdeckeinheit 32b befestigt sind. Alternativ sind weitere, einem Fachmann als sinnvoll erscheinende Befestigungsmöglichkeiten denkbar. Die Abstützelemente 72b sind im Wesentlichen aus Metall ausgebildet. Hierbei sind die Abstützelemente 72b im Wesentlichen aus Stahl ausgebildet. Alternativ sind weitere, einem Fachmann als sinnvoll erscheinende Metalle denkbar.

Die Abstützelemente 72b erstrecken sich in montiertem Zustand ausgehend von der Bodenseite 60b der Abdeckeinheit 32b in Richtung der Platteneinheit 14b. Jedes Kochfeldelektronikmodul 16b weist vier in einer Platine 52b des Kochfeldelektronikmoduls 16b eingebrachte Aufnahmeöffnungen 74b auf, die in montiertem Zustand jeweils eines der Abstützelemente 72b teilweise aufnehmen. Hierbei ist das Abstützelement 72b in montiertem Zustand mit einem der Platteneinheit 14b zuweisenden Ende in einer der Aufnahmeöffnungen 74b gelagert. Die Abstützelemente 72b sind zu einer Zentrierung der Kochfeldelektronikmodule 16b vorgesehen. Mittels der Abstützelemente 72b richtet die Abstützeinheit 30b in montiertem Zustand die Kochfeldelektronikmodule 16b in einer lateralen Richtung 36b aus. Für jedes der Abstützelemente 72b weist die Abstützeinheit 30b ein Federelement 34b auf, das das Kochfeldelektronikmodul 16b in montiertem Zustand gegen eine der Heizeinheiten 12b drückt. Das Federelement 34b ist als eine Spiralfeder ausgebildet. Das Federelement 34b umgibt in montiertem Zustand das Abstützelement 72b teilweise. In montiertem Zustand stützt sich das Federelement 34b mit einem von der Platteneinheit 14b wegweisenden Ende an der Abdeckeinheit 32b ab. Mit einem der Platteneinheit 14b zuweisenden Ende drückt das Federelement 34b gegen das Kochfeldelektronikmodul 16b.

In einem Verfahren zu einer Montage der erfindungsgemäßen Kochfeldvorrichtung 10b werden zunächst die Heizeinheiten 12b mittels der Befestigungseinheit 24b an der Platteneinheit 14b befestigt. Mittels der Verbindungseinheiten 18b werden dann die Kochfeldelektronikmodule 16b mit den Heizeinheiten 12b elektrisch und mechanisch verbunden. Anschließend werden die Abstützelemente 72b an der Bodenseite 60b der Abdeckeinheit 32b befestigt. In einem weiteren Verfahrensschritt wird die Abdeckeinheit 32b unterhalb der Platteneinheit 14 positioniert, wobei die Abstützelemente 72b bezüglich einer im Wesentlichen senkrecht zu der Platteneinheit 14b ausgerichteten Vertikalrichtung unterhalb von den Aufnahmeöffnungen 74b platziert werden. Anschließend wird die Abdeckeinheit 32b an der Platteneinheit 14b befestigt, wodurch ein Kontakt zwischen den Abstützelementen 72b und den Kochfeldelektronikmodulen 16b hergestellt wird. Hierbei drücken die die Abstützelemente 72b umgebenden Federelemente 34b die Kochfeldelektronikmodule 16b gegen die Heizeinheiten 12b.

Fig. 6 zeigt eine als eine Induktionskochfeldvorrichtung ausgebildete Kochfeldvorrichtung 10c mit vierzig als Induktionsheizeinheiten ausgebildete Heizeinheiten 12c, die in montiertem Zustand an einer Platteneinheit 14c befestigt sind. Die Heizeinheiten 12c sind mittels einer weiteren Rasteinheit 28c einer Befestigungseinheit 24c, die in montiertem Zustand an der Platteneinheit 14c befestigt ist und vierzig Ausnehmungen 26c zu einer Aufnahme der Heizeinheiten 12c aufweist, an der Platteneinheit 14c befestigt. Die Kochfeldvorrichtung 10c umfasst zwei Kochfeldelektronikmodule 16c zu einer Versorgung der Heizeinheiten 12c. Die Kochfeldvorrichtung 10c umfasst vierzig Verbindungseinheiten 18c, die jeweils dazu vorgesehen sind, eine der Heizeinheiten 12c und eines der Kochfeldelektronikmodule 16c direkt und im Wesentlichen starr miteinander zu verbinden. Hierbei ist eine Heizeinheit 12c mit einem der Kochfeldelektronikmodule 16c mechanisch mittels einer Rasteinheit 20c der Verbindungseinheit 18c und elektrisch mittels einer elektrischen Verbindungseinheit 22c der Verbindungseinheit 18c verbunden.

Die Kochfeldvorrichtung 10c umfasst eine Abdeckeinheit 32c, die eine Bodenseite 60b und vier Seitenwände 62c aufweist. Die Bodenseite 60c und die Seitenwände 62c sind einstückig und die Abdeckeinheit 32c einteilig ausgebildet. Die Abdeckeinheit 32c ist mittels mehrerer an der Platteneinheit 14c befestigter Strukturbauteile 64c sowie mittels eines Kochfeldrahmens 70c an der Platteneinheit 14c befestigt.

Die Kochfeldvorrichtung 10c umfasst eine Abstützeinheit 30c, die die Kochfeldelektronikmodule 16c in montiertem Zustand an der Abdeckeinheit 32b abstützt. Die Abstützeinheit 30c umfasst für jedes der Kochfeldelektronikmodule 16c vier Abstützelemente 72c, die das Kochfeldelektronikmodul 16c in montiertem Zustand an der Abdeckeinheit 32c abstützen und zentrieren. Alternativ ist denkbar, dass sich zwei benachbart angeordnete Kochfeldelektronikmodule jeweils Abstützelemente, die zwischen den beiden benachbart angeordneten Kochfeldelektronikmodulen angeordnet sind, teilen.

Die Abstützelemente 72c sind im Wesentlichen aus Kunststoff ausgebildet. Hierbei sind die Abstützelemente 72c im Wesentlichen aus Polyamid ausgebildet. Beispielsweise könnten die Abstützelemente 72c aus wenigsten einem aliphatischen Polyamid, beispielsweise PA66, ausgebildet sein. Alternativ sind weitere, einem Fachmann als sinnvoll erscheinende Kunststoffe denkbar. In montiertem Zustand sind die Abstützelemente 72c an der Bodenseite 60c der Abdeckeinheit 32c befestigt. Hierbei sind die Abstützelemente 72c mittels einer Rastverbindung an der Abdeckeinheit 32c befestigt. Ebenfalls denkbar ist, dass die Abstützelemente mittels einer Schraubverbindung an der Abdeckeinheit befestigt sind. Alternativ sind weitere, einem Fachmann als sinnvoll erscheinende Befestigungsmöglichkeiten denkbar.

Die Abstützelemente 72c sind bei Betrachtung einer Draufsicht im Wesentlichen L-förmig ausgebildet. Die Abstützelemente 72c sind jeweils an einer Ecke eines der Kochfeldelektronikmodule 16c angeordnet. Jedes Kochfeldelektronikmodul 16c ist von den sich an den Ecken des Kochfeldelektronikmoduls 16c befindlichen Abstützelementen 72c eingeklemmt. Die Abstützelemente 72c sind zu einer Zentrierung der Kochfeldelektronikmodule 16c vorgesehen. Mittels der Abstützelemente 72c richtet die Abstützeinheit 30c in montiertem Zustand die Kochfeldelektronikmodule 16b in einer lateralen Richtung 36c aus. Zusätzlich ist denkbar, dass die Abstützeinheit für jedes der Abstützelemente zumindest ein Federelement aufweist, das das Kochfeldelektronikmodul in montiertem Zustand gegen eine der Heizeinheiten drückt.

Es sind verschiedene, einem Fachmann als sinnvoll erscheinende Kombinationen zwischen den Ausführungsbeispielen denkbar. Beispielsweise könnte das als Federelement ausgebildete Abstützelement des Ausführungsbeispiels der Fig. 1 bis 4 in Kombination mit einer einteilig ausgebildeten Abdeckeinheit, beispielsweise der Fig. 5 und/oder der Fig. 6, verwendet werden. Ebenfalls denkbar ist eine Kombination eines Abstützelements des Ausführungsbeispiels der Fig. 5 und/oder des Ausführungsbeispiels der Fig. 6 mit einer mehrteilig ausgebildeten Abdeckeinheit, wie dies zu dem Ausführungsbeispiel der Fig. 1 bis 4 beschrieben wurde.

### Bezugszeichen

- 10: Kochfeldvorrichtung
- 12: Heizeinheit
- 14: Platteneinheit
- 16: Kochfeldelektronikmodul
- 18: Verbindungseinheit
- 20: Rasteinheit
- 22: Elektrische Verbindungseinheit
- 24: Befestigungseinheit
- 26: Ausnehmung
- 28: Weitere Rasteinheit
- 30: Abstützeinheit
- 32: Abdeckeinheit
- 34: Federelement
- 36: Laterale Richtung
- 38: Kochfeld
- 40: Bedieneinheit
- 42: Steuereinheit
- 44: Laschenelement
- 46: Ausformung
- 48: Trägerelement
- 50: Weiteres Trägerelement
- 52: Platine
- 54: Spulenträger
- 56: Rastelement
- 58: Stecker
- 60: Bodenseite
- 62: Seitenwand
- 64: Strukturbauteil
- 66: Vorsprung
- 68: Öffnung
- 70: Kochfeldrahmen
- 72: Abstützelement
- 74: Aufnahmeöffnung

## Patentansprüche

1. Kochfeldvorrichtung mit einer als Kochfeldplatte ausgebildeten Platteneinheit (14a-c), mit zumindest einer Heizeinheit (12a-c), die zumindest in montiertem Zustand an der Platteneinheit (14a-c) befestigt ist, und mit zumindest einem Kochfeldelektronikmodul (16a-c) zumindest zu einer Versorgung der Heizeinheit (12a-c),
wobei zumindest eine Verbindungseinheit (18a-c) vorgesehen ist, die die Heizeinheit (12a-c) und das Kochfeldelektronikmodul (16a-c) direkt und zumindest im Wesentlichen starr miteinander verbindet, **dadurch gekennzeichnet dass** die Verbindungseinheit (18a-c) zumindest eine elektrische Verbindungseinheit (22a-c) aufweist, die dazu vorgesehen ist, die Heizeinheit (12a-c) und das Kochfeldelektronikmodul (16a-c) elektrisch miteinander zu verbinden.

2. Kochfeldvorrichtung nach Anspruch 1, **dadurch gekennzeichnet, dass** die Verbindungseinheit (18a-c) zumindest eine Rasteinheit (20a-c) aufweist, die dazu vorgesehen ist, die Heizeinheit (12a-c) und das Kochfeldelektronikmodul (16a-c) mechanisch miteinander zu verbinden.

3. Kochfeldvorrichtung nach einem der vorhergehenden Ansprüche, **gekennzeichnet durch** zumindest eine Befestigungseinheit (24a-c), die in montiertem Zustand an der Platteneinheit (14a-c) befestigt ist und zumindest eine Ausnehmung (26a-c) zu einer Aufnahme der Heizeinheit (12a-c) aufweist.

4. Kochfeldvorrichtung nach Anspruch 3, **gekennzeichnet durch** zumindest eine weitere Rasteinheit (28a-c), mittels der die Heizeinheit (12a-c) zumindest in montiertem Zustand mit der Befestigungseinheit (24a-c) mechanisch verbunden ist.

5. Kochfeldvorrichtung nach einem der vorhergehenden Ansprüche, **gekennzeichnet durch** zumindest eine Abstützeinheit (30a-c), die das Kochfeldelektronikmodul (16a-c) zumindest in montiertem Zustand an zumindest einer Abdeckeinheit (32a-c) abstützt.

6. Kochfeldvorrichtung nach Anspruch 5, **dadurch gekennzeichnet, dass** die Abstützeinheit (30a-b) zumindest ein Federelement (34a-b) aufweist, das das Kochfeldelektronikmodul (16a-b) zumindest in montiertem Zustand gegen die Heizeinheit (12a-b) drückt.

7. Kochfeldvorrichtung zumindest nach Anspruch 5, **dadurch gekennzeichnet, dass** die Abstützeinheit (30b-c) zumindest in montiertem Zustand das Kochfeldelektronikmodul (16b-c) in zumindest einer lateralen Richtung (36b-c) ausrichtet.

8. Kochfeld, insbesondere Induktionskochfeld, mit zumindest einer Kochfeldvorrichtung (10a-c) nach einem der Ansprüche 1 bis 7.

9. Verfahren zur Montage einer Kochfeldvorrichtung (10a-c) nach einem der Ansprüche 1 bis 7, mit einer als Kochfeldplatte ausgebildeten Platteneinheit (14a-c), mit zumindest einer Heizeinheit (12a-c), die zumindest in montiertem Zustand an der Platteneinheit (14a-c) befestigt wird, mit zumindest einem Kochfeldelektronikmodul (16a-c) zumindest zu einer Versorgung der Heizeinheit (12a-c) und mit zumindest einer Verbindungseinheit (18a-c), wobei die Heizeinheit (12a-c) und das Kochfeldelektronikmodul (16a-c) durch die Verbindungseinheit (18a-c) direkt und zumindest im Wesentlichen starr miteinander verbindet, **dadurch gekennzeichnet, dass** die Verbindungseinheit (18a-c) die Heizeinheit (12a-c) und das Kochfeldelektronikmodul (16a-c) elektrisch miteinander verbindet.

## Claims

1. Hotplate device with a plate unit (14a-c) embodied as a hotplate, with at least one heating unit (12a-c), which, at least in the assembled state, is fastened to the plate unit (14a-c), and with at least one hotplate electronics module (16a-c) at least for supplying the heating unit (12a-c), wherein at least one connecting unit (18a-c) is provided, which connects the heating unit (12a-c) and the hotplate electronics module (16a-c) directly and at least substantially rigidly with one another, **characterised in that** the connecting unit (18a-c) has at least one electric connecting unit (22a-c) which is provided to electrically connect the heating unit (12a-c) and the hotplate electronics module (16a-c) with one another.

2. Hotplate device according to claim 1, **characterised in that** the connecting unit (18a-c) has at least one locking unit (20a-c), which is provided to connect the heating unit (12a-c) and the hotplate electronics module (16a-c) mechanically with one another.

3. Hotplate device according to one of the preceding claims, **characterised by** at least one fastening unit (24a-c) which, in the assembled state, is fastened to the plate unit (14a-c), and has at least one cut-out (26a-c) for receiving the heating unit (12a-c).

4. Hotplate device according to claim 3, **characterised by** at least one further locking unit (28a-c), by means of which at least in the assembled state the heating unit (12a-c) is connected mechanically with the fastening unit (24a-c).

5. Hotplate device according to one of the preceding claims, **characterised by** at least one supporting unit (30a-c), which, at least in the assembled state, supports the hotplate electronics module (16a-c) against at least one cover unit (32a-c).

6. Hotplate device according to claim 5, **characterised in that** the supporting unit (30a-b) has at least one spring element (34a-b), which, at least in the assembled state, pushes the hotplate electronics module (16a-c) against the heating unit (12a-b).

7. Hotplate device at least according to claim 5, **characterised in that** at least in the assembled state the supporting unit (30b-c) aligns the hotplate electronics module (16b-c) in at least one lateral direction (36b-c).

8. Hotplate, in particular induction hotplate, with at least one hotplate device (10a-c) according to one of claims 1 to 7.

9. Method for assembling a hotplate device (10a-c) according to one of claims 1 to 7, with a plate unit (14a-c) embodied as a hotplate, with at least one heating unit (12a-c), which is fastened to the plate unit (14a-c) at least in the assembled state, with at least one hotplate electronics module (16a-c) at least for supplying the heating unit (12a-c) and with at least one connecting unit (18a-c), wherein the heating unit (12a-c) and the hotplate electronics module (16a-c) connect directly with one another and at least substantially rigidly by means of the connecting unit (18a-c), **characterised in that** the connecting unit (18a-c) connects the heating unit (12a-c) and the hotplate electronics module (16a-c) electrically with one another.

## Revendications

1. Dispositif de champ de cuisson avec une unité de plaque (14a-c) formée sous la forme d'une plaque de champ de cuisson, avec au moins une unité de chauffage (12a-c), fixée au moins à l'état monté à l'unité de plaque (14a-c), et avec au moins un module électronique de champ de cuisson (16a-c) au moins pour une alimentation de l'unité de chauffage (12a-c), dans lequel au moins une unité de connexion (18a-c) est prévue, laquelle relie l'unité de chauffage (12a-c) et le module électronique de champ de cuisson (16a-c) directement et au moins essentiellement de façon rigide, **caractérisé en ce que** l'unité de connexion (18a-c) présente au moins une unité de connexion électrique (22a-c), prévue afin de relier électriquement l'unité de chauffage (12a-c) et le module électronique de champ de cuisson (16a-c).

2. Dispositif de champ de cuisson selon la revendication 1, **caractérisé en ce que** l'unité de connexion (18a-c) présente au moins une unité d'encliquètement (20a-c), prévue afin de relier mécaniquement l'unité de chauffage (12a-c) et le module électronique de champ de cuisson (16a-c).

3. Dispositif de champ de cuisson selon l'une des revendications précédentes, **caractérisé par** au moins une unité de fixation (24a-c) fixée à l'unité de plaque (14a-c) à l'état monté et présentant au moins un évidement (26a-c) pour l'accueil de l'unité de chauffage (12a-c).

4. Dispositif de champ de cuisson selon la revendication 3, **caractérisé par** au moins une unité d'encliquètement supplémentaire (28a-c), au moyen de laquelle l'unité de chauffage (12a-c) est reliée mécaniquement à l'unité de fixation (24a-c) au moins à l'état monté.

5. Dispositif de champ de cuisson selon l'une des revendications précédentes, **caractérisé par** au moins une unité d'appui (30a-c) qui étaie le module électronique de champ de cuisson (16a-c) sur au moins une unité de recouvrement (32a-c) au moins à l'état monté.

6. Dispositif de champ de cuisson selon la revendication 5, **caractérisé en ce que** l'unité d'appui (30a-b) présente au moins un élément à ressort (34a-b) qui presse le module électronique de champ de cuisson (16a-b) contre l'unité de chauffage (12a-b) au moins à l'état monté.

7. Dispositif de champ de cuisson au moins selon la revendication 5, **caractérisé en ce que** l'unité d'appui (30b-c) oriente le module électronique de champ de cuisson (16b-c) au moins dans une direction latérale (36b-c) au moins à l'état monté.

8. Champ de cuisson, en particulier champ de cuisson à induction, avec au moins un dispositif de champ de cuisson (10a-c) selon l'une des revendications 1 à 7.

9. Procédé pour le montage d'un dispositif de champ de cuisson (10a-c) selon l'une des revendications 1 à 7, avec une unité de plaque (14a-c) formée sous la forme d'une plaque de champ de cuisson, avec au moins une unité de chauffage (12a-c), fixée au moins à l'état monté à l'unité de plaque (14a-c), avec au moins un module électronique de champ de cuisson (16a-c) au moins pour une alimentation de l'unité de chauffage (12a-c) et avec au moins une unité de connexion (18a-c), dans lequel l'unité de chauffage (12a-c) et le module électronique de champ de cuisson (16a-c) sont reliés directement et au moins essentiellement de façon rigide par l'unité de connexion (18a-c), **caractérisé en ce que** l'unité de connexion (18a-c) relie électriquement l'unité de chauffage (12a-c) et le module électronique de champ de cuisson (16a-c).
